# EUROPÄISCHE PATENTANMELDUNG

(11) **EP 4 802 900 A1**
(43) Veröffentlichungstag der Anmeldung: **09.09.2026**
(21) Anmeldenummer: 25162047.2
(22) Anmeldetag: 06.03.2025
(51) Int. Cl.: A22C 25/14

(54) **VORRICHTUNG ZUM ENTWEIDEN VON IN DER BAUCHHÖHLE GEÖFFNETEN FISCHEN**

(71) Anmelder: Nordischer Maschinenbau Rud. Baader GmbH + Co. KG, 23560 Lübeck (DE)
(72) Erfinder: Paulsohn, Carsten, 23560 Lübeck (DE)
(74) Vertreter: Stork Bamberger Patentanwälte PartmbB

(57) **Zusammenfassung**

Vorrichtung (10) zum Entweiden von in der Bauchhöhle (11) geöffneten Fischen (12), umfassend eine Transporteinrichtung (13) mit einem umlaufend angetriebenen Förderelement (14) zum Transport der Fische (12) in einer Transportebene E in Transportrichtung T entlang einer Transportstrecke, mindestens ein entlang der Förderstrecke angeordnetes Saugwerkzeug (15) zum Absaugen von Eingeweiden aus der Bauchhöhle (11), wobei jedes Saugwerkzeug (15) zum Eintauchen in die und zum Auftauchen aus der Bauchhöhle (11) sowie zum Lösen und Absaugen von Eingeweiden senkrecht zur Transportebene E und in der Transportebene E entlang der Transportrichtung T ausgebildet und eingerichtet ist, sowie ein die Transporteinrichtung (13) und jedes Saugwerkzeug (15) mindestens teilweise gegenüber der Umgebung abschirmendes Gehäuse (16), wobei jedem Saugwerkzeug (15) mindestens eine Leitung (18) zum Ableiten der abgesaugten Eingeweide aus dem Saugwerkzeug (15) und zum Einleiten von Reinigungsflüssigkeit in das Saugwerkzeug (15) zugeordnet ist, die mit einem Ende (19) am Saugwerkzeug (15) angeschlossen ist und an einem dem Saugwerkzeug (15) entgegengesetzten freien Ende (20) zum Anschließen an eine Zentralleitung (21) für die abzusaugenden Eingeweide einerseits und die einzuleitende Reinigungsflüssigkeit andererseits ausgebildet und eingerichtet ist, die sich dadurch auszeichnet, dass jede ein Saugwerkzeug (15) mit der Zentralleitung (21) verbindende Leitung (18) aus einer Rohrkonstruktion (22) gebildet ist, wobei die Rohrkonstruktion (22) zum mitlaufenden Bewegen mit dem oder jedem Saugwerkzeug (15) ausgebildet und eingerichtet ist.

## Beschreibung

Die Erfindung betrifft eine Vorrichtung zum Entweiden von in der Bauchhöhle geöffneten Fischen, umfassend eine Transporteinrichtung mit einem umlaufend angetriebenen Förderelement zum Transport der Fische in einer Transportebene E in Transportrichtung T entlang einer Transportstrecke, mindestens ein entlang der Förderstrecke angeordnetes Saugwerkzeug zum Absaugen von Eingeweiden aus der Bauchhöhle, wobei jedes Saugwerkzeug zum Eintauchen in die und zum Auftauchen aus der Bauchhöhle sowie zum Lösen und Absaugen von Eingeweiden senkrecht zur Transportebene E und in der Transportebene E entlang der Transportrichtung T ausgebildet und eingerichtet ist, sowie ein die Transporteinrichtung und jedes Saugwerkzeug mindestens teilweise gegenüber der Umgebung abschirmendes Gehäuse, wobei jedem Saugwerkzeug mindestens eine Leitung zum Ableiten der abgesaugten Eingeweide aus dem Saugwerkzeug und zum Einleiten von Reinigungsflüssigkeit in das Saugwerkzeug zugeordnet ist, die mit einem Ende am Saugwerkzeug angeschlossen ist und an einem dem Saugwerkzeug entgegengesetzten freien Ende zum Anschließen an eine Zentralleitung für die abzusaugenden Eingeweide einerseits und die einzuleitende Reinigungsflüssigkeit andererseits ausgebildet und eingerichtet ist.

Solche Vorrichtungen kommen in der fischverarbeitenden Industrie zum Einsatz, um Fische, insbesondere der Spezies Lachs, von Eingeweiden zu befreien. Dazu werden die Fische vorzugsweise Kopf voraus und mit der geöffneten Bauchseite nach oben weisend in Transportrichtung T vorzugsweise kontinuierlich transportiert. Das Entweiden kann einschrittig oder mehrschrittig erfolgen. In die in vorzugsweise horizontaler Transportebene transportierten Fische taucht jedes Saugwerkzeug von oben in die Bauchhöhle des Fisches ein, um mit diesem in Wirkverbindung zu kommen und die Eingeweide mindestens teilweise zu lösen und abzusaugen. Da die Fische in Transportrichtung T bewegt werden, wird jedes Saugwerkzeug beim Saugvorgang mit dem Fisch mindestens abschnittsweise mitbewegt. Das kann mit gleicher oder ungleicher Geschwindigkeit erfolgen. Nach dem Absaugen, also insbesondere, wenn das Saugwerkzeug das Ende der Bauchhöhle im Schwanzbereich oder im Kopfbereich erreicht hat, wird das Saugwerkzeug wieder aus der Bauchhöhle nach oben und zurück in seine Ausgangsposition zum Eintauchen in den nächsten Fisch bewegt. Die abgesaugten Eingeweide, also insbesondere innere Organe, Gewebe, Blut und dergleichen, werden über die Leitungen der Zentralleitung, die üblicherweise ortsfest und fabrikseitig vorgesehen ist, zugeführt. Von der Zentralleitung werden die Eingeweide einem Sammelbehälter oder dergleichen zugeführt.

Beim Verarbeitungsprozess der Fische, also insbesondere beim Entweiden, entstehen nicht nur innerhalb des Gehäuses der Vorrichtung Verunreinigungen. Ganz besonders sind die Saugwerkzeuge, die daran anschließenden Leitungen sowie die Zentralleitung von innen von massiven Verunreinigungen betroffen. Das erfordert ein regelmäßiges und gründliches Reinigen insbesondere auch von innen. Dazu sind alle Leitungen der Vorrichtung mit der Zentralleitung, die sich üblicherweise über große Teile der Fabrik in einem geschlossenen Kreislauf erstreckt, verbunden. Dadurch können die Zentralleitung und die daran angeschlossenen Leitungen sowie die mit den Leitungen verbundenen Saugwerkzeuge zyklisch mit dem heißen Wasser-Reinigungsmittel-Gemisch beaufschlagt und gespült werden. Durch gezieltes Steuern kann das heiße Wasser-Reinigungsmittel-Gemisch durch die Zentralleitung und die Leitungen in die Ansaugrohre der Saugwerkzeuge geleitet werden. Dabei strömt das Reinigungsmedium entgegen der Strömungsrichtung der Eingeweide in Richtung der Öffnungen der Saugwerkzeuge und reinigt diese dabei mit. Das aus den Saugwerkzeugen austretende Reinigungsmedium wird aufgefangen und abgeführt.

Bekannte Lösungen weisen für Vorrichtungen mit ortsfesten, also nicht mit in und entgegen der Transportrichtung T mitlaufenden, Saugwerkzeugen massive Leitungen auf, die die Saugwerkzeuge mit der Zentralleitung verbinden. Im Arbeitsmodus, also dem Modus, in dem die Eingeweide oder Teile davon in der Bauchhöhle gelöst und aus der Bauchhöhle gesaugt und über die massive Leitung der Zentralleitung zugeführt werden, liegt an dem aus Zentralleitung, Leitung und Saugwerkzeug bestehenden System ein Unterdruck an, mittels dem die Eingeweide einem Sammelbehälter zugeführt werden. Im Reinigungsmodus, also dem Modus, in dem Reinigungsmedium, vorzugsweise ein Wasser-Reinigungsmittel-Gemisch hoher Temperatur, mit Überdruck durch das System geleitet wird, wird das gesamte (Leitungs-)System durchgespült und gereinigt.

Bei bekannten Vorrichtungen mit in einer Ebene mit den zu bearbeitenden Fischen mitlaufenden Saugwerkzeugen werden anstelle der massiven, unflexiblen Leitungen flexible Schläuche eingesetzt, um eine ausgleichende Verbindung zwischen dem bewegten, mitlaufenden Saugwerkzeug und der starren Zentralleitung herzustellen. Es hat sich jedoch gezeigt, dass die flexiblen Schläuche insbesondere für den Reinigungsmodus, also das Spülen mit dem heißen Wasser-Reinigungsmittel-Gemisch, ungeeignet sind. Zum einen sind die Schläuche bzw. deren Materialien, die noch eine ausreichend gute Ausgleichsbewegung zulassen, anfällig gegen (Reinigungs-)Chemikalien, was zu einem erhöhten Verschleiß führt, der wiederum ein häufiges Austauschen der Schläuche erfordert. Zum anderen kann die durch das heiße Wasser-Reinigungsmittel-Gemisch erzeugte Wärmebelastung zum Schwächen und schlimmstenfalls zum Platzen der aus Kunststoffen bestehenden flexiblen Schläuche führen. Diese Sicherheitsrisiken sind nicht akzeptabel, so dass grundsätzlich massivere Leitungen erwünscht sind, die jedoch das Mitlaufen der Saugwerkzeuge verhindern oder zumindest stark einschränken.

Der Erfindung liegt somit die Aufgabe zugrunde, eine Vorrichtung mit einer Leitung bereitzustellen, die einerseits ein störungsfreies Mitlaufen der Saugwerkzeuge ermöglicht und andererseits ausreichend resistent gegen die vom Wasser-Reinigungsmittel-Gemisch ausgeübte thermische und chemische Belastung ist.

Diese Aufgabe wird durch eine Vorrichtung zum Entweiden von in der Bauchhöhle geöffneten Fischen der eingangs genannten Art dadurch gelöst, dass jede ein Saugwerkzeug mit der Zentralleitung verbindende Leitung aus einer Rohrkonstruktion gebildet ist, wobei die Rohrkonstruktion zum mitlaufenden Bewegen mit dem oder jedem Saugwerkzeug ausgebildet und eingerichtet ist. Mit der mitlaufenden Bewegung der Rohrkonstruktion ist definiert, dass diese die Bewegung der Saugwerkzeuge relativ zur Zentralleitung ausgleicht. Das dem Saugwerkzeug zugewandte und mit diesem fest aber lösbar verbundene Ende der Rohrkonstruktion folgt dem Saugwerkzeug bzw. dessen Bewegungen. Das entgegengesetzte Ende der Rohrkonstruktion ist fest aber lösbar mit der Zentralleitung verbunden. Die mitlaufende Bewegung der Rohrkonstruktion bezieht sich insbesondere entlang der Transporteinrichtung T, während sich das Saugwerkzeug in der Bauchhöhle der in Transportrichtung bewegten Fische befindet bzw. auch während der Bewegung außerhalb der Bauchhöhle aus einer und zurück in die Ausgangsposition. Diese mitlaufende Ausführungsform der Rohrkonstruktion ermöglicht ein störungsfreies und behinderungsfreies Bewegen der Saugwerkzeuge, so dass diese frei beweglich sind. Anders ausgedrückt lässt die erfindungsgemäße Rohrkonstruktion ein Mitlaufen der Werkzeuge mit den zu verarbeitenden Fischen zu. Durch die Rohrkonstruktion ist eine massive Leitung geschaffen, die resistent gegenüber Hitze einerseits und chemischen Lösungen andererseits ist.

Zweckmäßigerweise umfasst die Vorrichtung mindestens drei Saugwerkzeuge, besonders bevorzugt vier Saugwerkzeuge, wobei jedes Saugwerkzeug mit einer separaten Rohrkonstruktion mit der Zentralleitung verbindbar ausgebildet und eingerichtet ist. Damit kann die Bauchhöhle eines Fisches besonders effektiv und gründlich von den Eingeweiden befreit werden. Die separate Anbindung aller Saugwerkzeuge an die Zentralleitung mittels einer mitbewegbaren Rohrkonstruktion ermöglicht ein kollisionsfreies und schnelles Verarbeiten der Fische.

Vorteilhafterweise umfasst die Vorrichtung ein Messinstrument, das derart konfiguriert ist, um spezifische Fischdaten zu erfassen, sowie mindestens eine Steuerungseinrichtung zum Steuern jedes Saugwerkzeugs in Abhängigkeit der von dem Messinstrument erfassten, spezifischen Fischdaten. Durch die Steuerungseinrichtung können die vom Messinstrument detektierten Daten und Informationen verarbeitet werden, um eine optimale Bewegung der Saugwerkzeuge zu gewährleisten.

Eine besonders bevorzugte Weiterbildung ist dadurch gekennzeichnet, dass jede Rohrkonstruktion mindestens zwei Rohrabschnitte umfasst und die Rohrkonstruktion mit den beiden Rohrabschnitten zwischen dem Saugwerkzeug und der Zentralleitung mindestens drei Gelenkpunkte, um die die Rohrabschnitte in einem Schwenkbereich schwenkbar sind, aufweist. Die Rohrkonstruktion kann auch mehr als zwei Rohrabschnitte aufweisen. Zur Begrenzung des zu bewegenden Gewichts der Rohrkonstruktion sind jedoch zwei Rohrabschnitte bevorzugt, so dass das begrenzte Gewicht die Bewegung der Saugwerkzeuge nur unbedeutend oder gar nicht beeinträchtigt. Durch die drei Gelenkpunkte, die Anzahl der Gelenkpunkte kann auch vier oder mehr betragen, ist eine einfache und reibungsarme Bewegung der Rohrkonstruktion in vertikaler Richtung und in horizontaler Richtung, vorzugsweise als überlagerte Bewegung, ermöglicht. Dadurch, dass die Rohrkonstruktion selbst inaktiv ist und nur durch die Bewegung der Saugwerkzeuge mitbewegt wird, kommt es auf geringes Gewicht und eine reibungsarme Beweglichkeit an.

Besonders bevorzugt ist ein erster Gelenkpunkt im Übergangsbereich von der Rohrkonstruktion zur Zentralleitung, ein zweiter Gelenkpunkt im Übergangsbereich von der Rohrkonstruktion zum Saugwerkzeug und ein dritter Gelenkpunkt im Bereich der Verbindung der beiden Rohrabschnitte ausgebildet. Durch diese Verteilung und Positionierung der Gelenkpunkte ist die Bewegbarkeit und Flexibilität zum einen gleichmäßig auf die Länge der Rohrkonstruktion verteilt. Zum anderen verleiht diese Verteilung und Positionierung der Gelenkpunkte der Rohrkonstruktion eine hohe Stabilität.

Vorteilhafterweise gewährleisten die Schwenkbereiche aller drei Gelenkpunkte ein Schwenken in einer Schwenkebene, die vertikal aufgespannt und parallel zur Transportrichtung T der Fische ausgerichtet ist. Die Schwenkebene kann für alle Schwenkbereiche identisch sein. Die Schwenkbereiche können aber auch in unterschiedlichen Schwenkebenen liegen, die allerdings alle parallel zueinander liegen. Diese Ausführungsform stellt sicher, dass die Rohrkonstruktion leichtgängig und verkantungsfrei bewegbar ist.

Besonders bevorzugt bestehen sämtliche Rohrabschnitte der Rohrkonstruktion aus einem chemisch beständigen Material. Vorteilhafterweise sind alle Rohrabschnitte aus Edelstahl hergestellt. Eine solche Ausbildung ist extrem beständig gegenüber heißem Reinigungsmedium und chemischen Zusatzstoffen im Reinigungsmedium. Des Weiteren lassen sich Rohrabschnitte aus Edelstahl besonders einfach und gründlich reinigen.

Zweckmäßigerweise sind im Bereich aller gelenkigen Verbindungsstellen der Rohrabschnitte der Rohrkonstruktion Dichtelemente angeordnet. Entsprechend sind Dichtmittel im Bereich des Übergangs der Rohrkonstruktion zum Saugwerkzeug, im Bereich des Übergangs der Rohrkonstruktion zur Zentralleitung sowie im Bereich der Verbindung der beiden Rohrabschnitte, also an allen Gelenkpunkten, angeordnet. Jedes Dichtelement ist dazu ausgebildet, die Gelenkpunkte zu dichten, wobei geringe Undichtigkeiten zugunsten einer Leichtgängigkeit der Schwenkbewegung toleriert werden.

Vorzugsweise umfasst jedes Dichtelement einen einfachen Dichtring. Mittels des Dichterings kann die Nahtstelle zwischen den benachbarten und aneinanderstoßenden Komponenten einfach und zuverlässig gedichtet werden.

Zweckmäßigerweise ist jedes Dichtelement aus einem chemisch beständigen Material hergestellt. Dadurch ist die Lebensdauer und Funktionalität der Dichtelemente trotz möglicher Kontakte zum reinigungsmedium optimiert.

Ebenso zweckmäßig ist jedes Dichtelement aus einem reibarmen Material hergestellt, wodurch die Bewegbarkeit der einander gegenüber abgedichteten Komponenten nur gering oder gar nicht beeinträchtigt wird.

Optional ist jedes Dichtelement aus PE-UHMW (Polyethylen Ultra High Molecular Weight), Polytetrafluorethylen oder Perfluoralkoxy oder Fluorethylen-Propylen oder dergleichen hergestellt. Besonders bevorzugt kommt PE 1000 UHMW als Material zum Einsatz. Andere Materialien oder Materialkombinationen mit entsprechenden Eigenschaften, insbesondere Kunststoffe mit hohem Molekulargewicht von 1 bis 9 Millionen g/Mol können ebenso für das Dichtelement eingesetzt werden.

Besonders bevorzugt weist jedes Dichtelement im Bereich seiner Dichtfläche eine Labyrinthstruktur auf. Dadurch kann die Dichtwirkung verbessert werden, ohne die Reibung zu erhöhen.

Eine vorteilhafte Ausführungsform ist dadurch gekennzeichnet, dass mindestens im Bereich jedes Übergangs von der Rohrkonstruktion zur Zentralleitung ein Stellventil angeordnet ist. Jedes Stellventil kann der Rohkonstruktion oder der Zentralleitung zugeordnet sein. Zusätzlich können weitere schaltbare Stellventile im Bereich der Zentralleitung beabstandet zu den Übergängen zu Rohrkonstruktionen vorgesehen sind. Jedes Stellventil ist mindestens zwischen einer Schließstellung und einer Strömungsstellung hin und her schaltbar ausgebildet.

Zweckmäßigerweise ist die Steuerungseinrichtung auch mit dem oder jedem Stellventil verbunden. Damit ist auf einfache und schnelle Weise zwischen dem Verarbeitungsmodus und dem zyklischen Reinigungsmodus hin und her zu schalten.

Eine besonders vorteilhafte Weiterbildung zeichnet sich dadurch aus, dass der Rohrkonstruktion ein federndes Rückholelement zugeordnet ist. Das Rückholelement sorgt dafür, dass das Saugwerkzeug, an dem die Rohrkonstruktion mit einem Ende hängt, in seiner Bewegung unterstützt wird, indem die Rohrkonstruktion durch das federnde Rückholelement aktiv zurück in eine Ausgangsstellung, in der die Saugwerkzeuge und damit auch die Rohrkonstruktion unmittelbar vor dem Verarbeiten eines nachrückenden Fisches stehen, bewegt wird.

Vorteilhafterweise ist zwischen der Rohrkonstruktion einerseits und der Zentralleitung und/oder dem Gehäuse der Vorrichtung andererseits ein Kolbenrückholfederelement oder dergleichen angeordnet. Damit ist auf einfache und sichere Weise eine Rückholbewegung der Rohrkonstruktion in die Ausgangsposition realisierbar. Andere Rückholelemente, wie z.B. Pneumatikzylinder, Stellmotore oder dergleichen sind ebenfalls einsetzbar.

Eine vorteilhafte Ausführungsform ist dadurch gekennzeichnet, dass innerhalb des Gehäuses mindestens eine Düse, vorzugsweise jedoch mehrere einem Düsenstock oder mehreren Düsenstöcken zugeordnete Düsen angeordnet sind, die zum Reinigen des Innenraums der Vorrichtung einerseits zum Anschluss an eine Reinigungsleitungssystem, beispielsweise die Zentralleitung, ausgebildet und eingerichtet sind, und andererseits zum Erreichen des gesamten Innenraums sowie des oder jedes Saugwerkzeugs positioniert und ausgerichtet sind. Diese Düse oder Düsen sind ebenfalls an ein oder das zentrale Reinigungssystem angeschlossen, um zyklisch den gesamten Innenraum einschließlich der Saugwerkzeuge zu reinigen.

Weitere zweckmäßige und/oder vorteilhafte Merkmale und Weiterbildungen zur Vorrichtung ergeben sich aus den Unteransprüchen und der Beschreibung. Besonders bevorzugte Ausführungsformen der Vorrichtung werden anhand der beigefügten Zeichnung näher erläutert. In der Zeichnung zeigt:
- Fig. 1: eine schematische Darstellung der erfindungsgemäßen Vorrichtung in perspektivischer Ansicht von schräg oben und vorne (zur besseren Sichtbarkeit ohne die vordere Abdeckung),

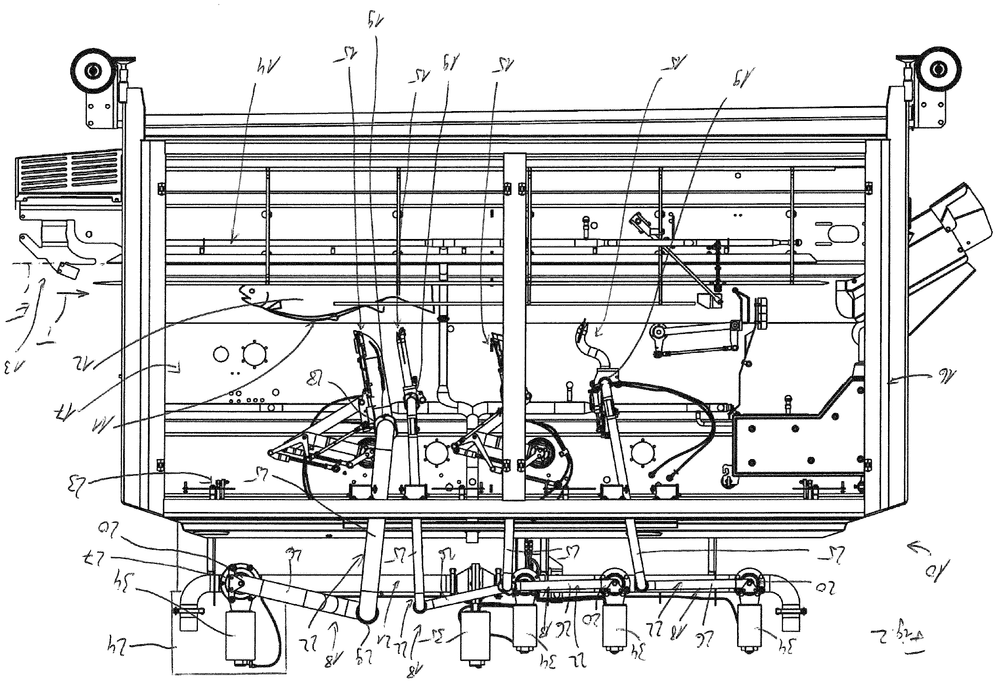

- Fig. 2: eine schematische Darstellung der Vorrichtung gemäß Figur 1 in Vorderansicht,
- Fig. 3: eine schematische Darstellung der Vorrichtung gemäß Figur 1 in Draufsicht,

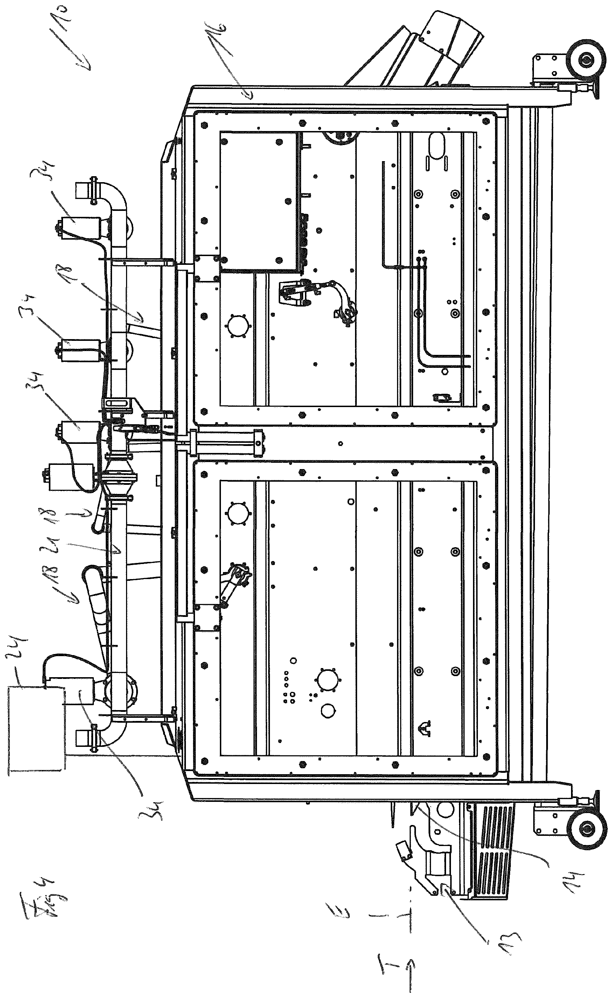

- Fig. 4: eine schematische Darstellung der Vorrichtung gemäß Figur 1 in Rückansicht,

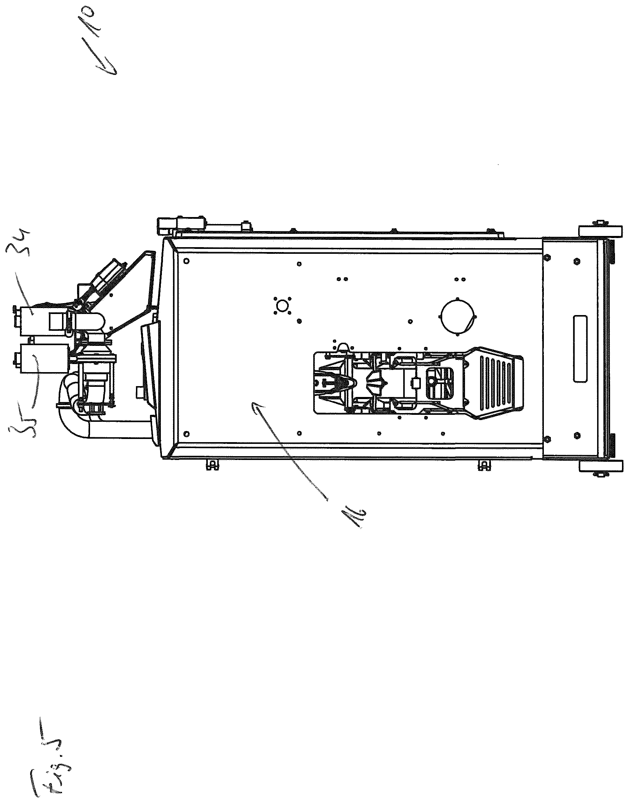

- Fig. 5: eine schematische Darstellung der Vorrichtung gemäß Figur 1 in Seitenansicht,
- Fig. 6: eine schematische Darstellung eines Ausschnitts der Rohrkonstruktion zweier in einem Gelenkpunkt verbundener Rohrabschnitte,

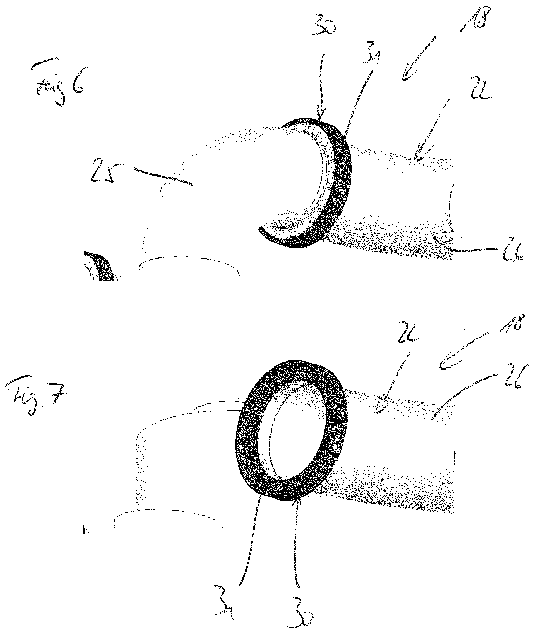

- Fig. 7: eine schematische Darstellung eines freien Endes eines Rohrabschnitts mit einem Dichtelement,

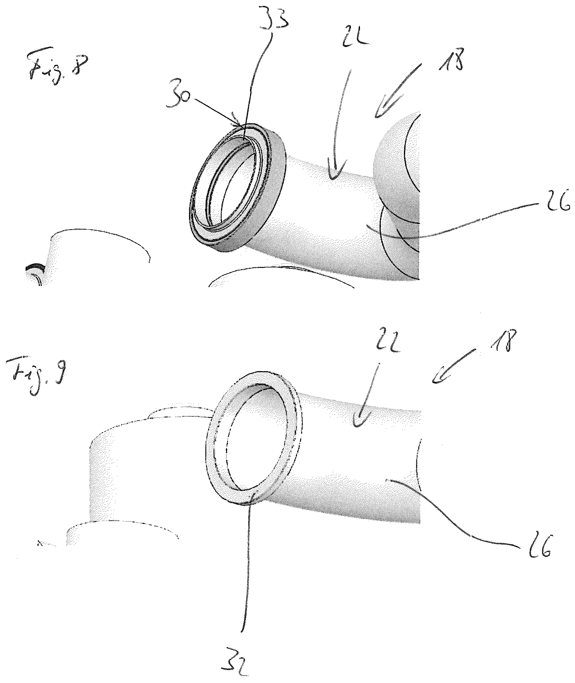

- Fig. 8: eine schematische Darstellung eines freien Endes einer weiteren Ausführungsform eines Rohrabschnitts mit einem Dichtelement, und
- Fig. 9: eine schematische Darstellung eines freien Endes des Rohrabschnitts gemäß Figur 8 ohne das Dichtelement.

Die in der Zeichnung dargestellte Vorrichtung dient zum Entweiden von Lachs. Die erfindungsgemäße Vorrichtung ist jedoch in entsprechender Weise auch zum Entweiden anderer Fischspezies einsetzbar. Unabhängig von der verarbeiteten Fischspezies ist die Vorrichtung in einem ersten Modus zum Entweiden und Absaugen der Eingeweide und in einem zweiten Modus zum Reinigen, also insbesondere zum Durchspülen, der Rohrkonstruktion mit den sich daran anschließenden Saugwerkzeugen ausgebildet und eingerichtet.

Die Erfindung befasst sich mit einer Vorrichtung 10 zum Entweiden von in der Bauchhöhle 11 geöffneten Fischen 12, umfassend eine Transporteinrichtung 13 mit einem umlaufend angetriebenen Förderelement 14 zum Transport der Fische 12 in einer Transportebene E in Transportrichtung T entlang einer Transportstrecke. Die Vorrichtung 10 umfasst weiterhin mindestens ein entlang der Förderstrecke angeordnetes Saugwerkzeug 15 zum Absaugen von Eingeweiden aus der Bauchhöhle 11. In der bevorzugten und dargestellten Ausführungsform sind vier in Transportrichtung T hintereinander angeordnete Saugwerkzeuge 15 angeordnet, die zeitgleich und/oder zeitversetzt mit dem Fisch 12 in Wirkverbindung bringbar sind.

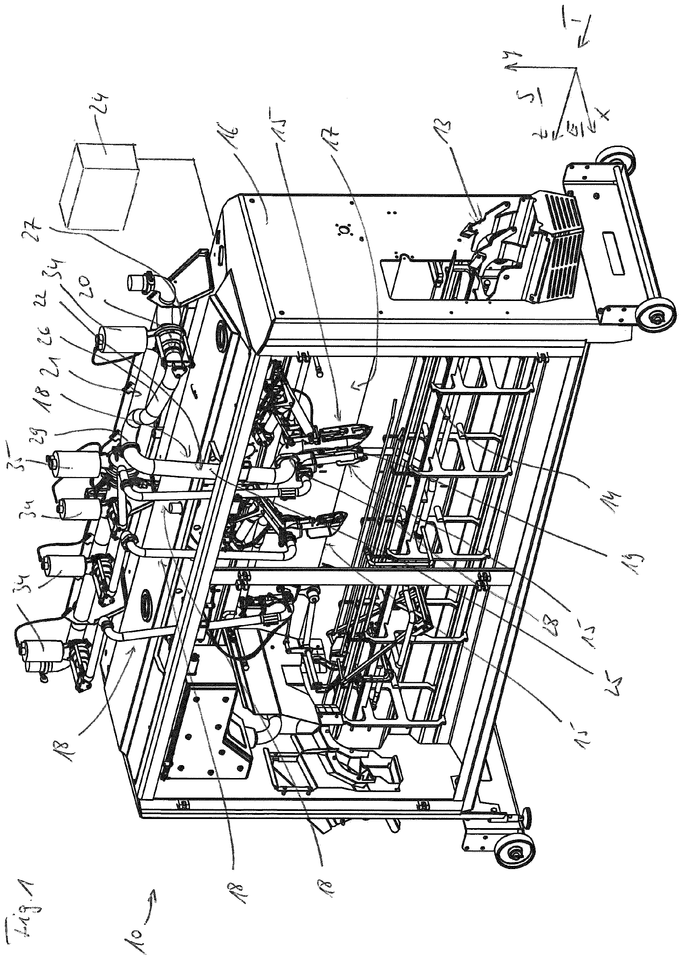

Jedes Saugwerkzeug 15 ist zum Eintauchen in die und zum Auftauchen aus der Bauchhöhle 11 sowie zum Lösen und Absaugen von Eingeweiden senkrecht zur Transportebene E (aufgespannt durch X- und Z-Achse oder parallel dazu, siehe insbesondere Figur 1) und in der Transportebene E entlang der Transportrichtung T ausgebildet und eingerichtet. Die vertikalen und horizontalen Bewegungen jedes Saugwerkzeugs 15 können sich überlagern. Weiterhin umfasst die Vorrichtung 10 ein die Transporteinrichtung 13 und jedes Saugwerkzeug 15 mindestens teilweise gegenüber der Umgebung abschirmendes Gehäuse 16. Das Gehäuse 16 schirmt den Innenraum 17 der Vorrichtung 10 bevorzugt nahezu vollständig gegenüber der Umgebung ab. Der Innenraum 17 ist - ergänzend zum Eintritt der Transporteinrichtung 13 in das Gehäuse 16 und zum Austritt der Transporteinrichtung 13 aus dem Gehäuse 16 - mindestens von einer Seite zugänglich, vorzugsweise von der Vorderseite, an der in der dargestellten Ausführungsform zur besseren Übersicht die Schutzklappen entfernt sind. Jedem Saugwerkzeug 15 ist eine Leitung 18 zum Ableiten der abgesaugten Eingeweide aus dem Saugwerkzeug 15 und zum Einleiten von Reinigungsflüssigkeit in das Saugwerkzeug 15 zugeordnet, die mit einem Ende 19 am Saugwerkzeug 15 angeschlossen ist und an einem dem Saugwerkzeug 15 entgegengesetzten freien Ende 20 zum Anschließen an eine Zentralleitung 21 für die abzusaugenden Eingeweide einerseits und die einzuleitende Reinigungsflüssigkeit andererseits ausgebildet und eingerichtet ist. Die Zentralleitung 21 kann Bestandteil der Vorrichtung 10 sein. Bevorzugt ist die Zentralleitung 21 jedoch fabrikseitig bereitgestellt, so dass die aus dem Gehäuse 16 nach oben herausragende Rohrkonstruktion 22 an die Zentralleitung 21 anschließbar ist.

Diese Erfindung zeichnet sich erfindungsgemäß dadurch aus, dass jede ein Saugwerkzeug 15 mit der Zentralleitung 21 verbindende Leitung 18 aus einer Rohrkonstruktion 22 gebildet ist, wobei die Rohrkonstruktion 22 zum mitlaufenden Bewegen mit dem oder jedem Saugwerkzeug 15 ausgebildet und eingerichtet ist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Alle vier Saugwerkzeuge 15 sind mit einer separaten Rohrkonstruktion 22 mit der Zentralleitung 21 verbindbar ausgebildet und eingerichtet und auch verbunden. Die Bewegung der Saugwerkzeuge 15 wird aktiv gesteuert. Dazu umfasst die Vorrichtung 10 ein Messinstrument 23 (oder mehrere Messinstrumente), das derart konfiguriert ist, um spezifische Fischdaten zu erfassen, sowie mindestens eine Steuerungseinrichtung 24 zum Steuern jedes Saugwerkzeugs 15 in Abhängigkeit der von dem Messinstrument 23 erfassten spezifischen Fischdaten.

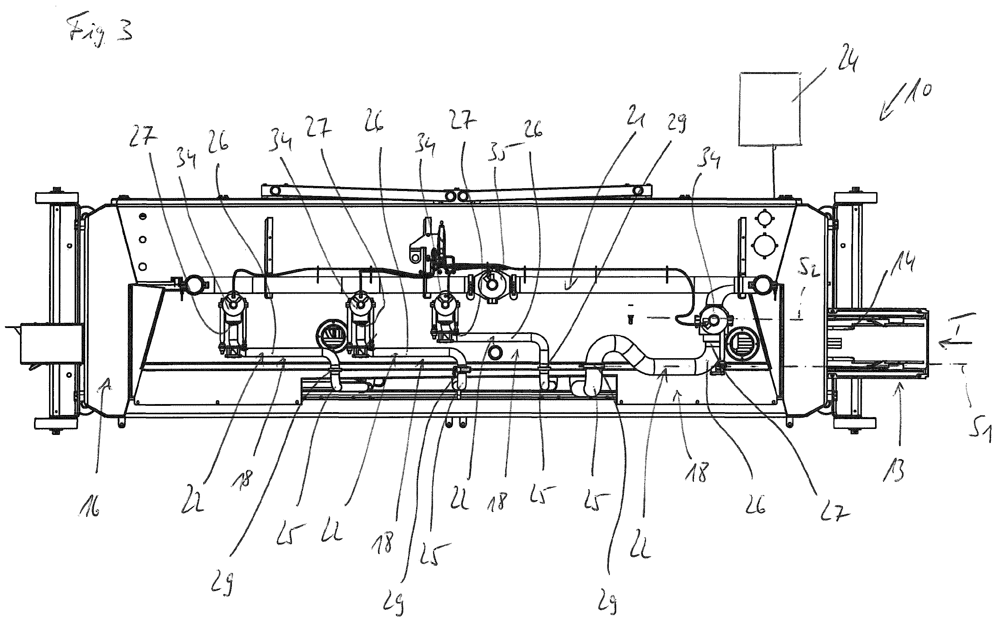

Jede Rohrkonstruktion 22 umfasst mindestens zwei Rohrabschnitte 25, 26. Die Rohrabschnitte 25, 26 können mehrteilig ausgebildet sein. In der dargestellten Ausführungsform sind beide Rohrabschnitte 25, 26 jeweils einstückig - optional aus mehreren Rohrkomponenten zur Bildung von gekrümmten Verläufen zusammengesetzt - ausgebildet. Die Rohrkonstruktion 22 mit den beiden Rohrabschnitten 25, 26 weist zwischen dem Saugwerkzeug 15 und der Zentralleitung 21 mindestens drei Gelenkpunkte 27, 28, 29, um die die Rohrabschnitte 25, 26 in einem Schwenkbereich schwenkbar sind, auf. Ein erster Gelenkpunkt 27 ist im Übergangsbereich von der Rohrkonstruktion 22 zur Zentralleitung 21 ausgebildet. Ein zweiter Gelenkpunkt 28 im Übergangsbereich von der Rohrkonstruktion 22 zum Saugwerkzeug 15 ausgebildet. Ein dritter Gelenkpunkt 29 ist im Bereich der Verbindung der beiden Rohrabschnitte 25, 26 ausgebildet. Die Schwenkbereiche aller drei Gelenkpunkte 27, 28, 29 gewährleisten ein Schwenken in einer Schwenkebene S (aufgespannt durch di Y- und Z-Achse siehe insbesondere Figur 1), die vertikal aufgespannt und parallel zur Transportrichtung T der Fische 12 ausgerichtet ist. In der gezeigten Ausführungsform liegen die Gelenkpunkte 27, 28, 29 in unterschiedlichen Schwenkebenen S₁, S₂ (nicht dargestellt S_{N}), die allerdings alle parallel zueinander liegen (siehe insbesondere Figur 3).

Sämtliche Rohrabschnitte 25, 26 der Rohrkonstruktion 22 bestehen aus einem chemisch beständigen Material. Das kann ein Kunststoff sein. Bevorzugt sind aber alle Rohrabschnitte 25, 26 aus Edelstahl hergestellt. Die Rohrabschnitte 25, 26 sind jedoch nicht direkt miteinander verbunden bzw. an dem Saugwerkzeug 15 bzw. der Zentralleitung 21 angeordnet. Vielmehr sind im Bereich aller gelenkigen Verbindungsstellen der Rohrabschnitte 25, 26 der Rohrkonstruktion 22, also im Bereich der Gelenkpunkte 27, 28, 29, Dichtelemente 30 angeordnet. Jedes Dichtelement 30 umfasst einen einfachen Dichtring 31, der auch als Gleitring ausgebildet sein kann. Jedes Dichtelement 30 bzw. jeder Dichtring 31 ist aus einem chemisch beständigen und reibarmen Material hergestellt. Als Material, aus dem die Dichtelemente 30 bzw. Dichtringen31 hergestellt sind, kommen insbesondere Polytetrafluorethylen (PTFE) oder Perfluoralkoxy (PFA) oder Fluorethylen-Propylen (FEP) oder dergleichen zum Einsatz. In anderen Ausführungsformen sind die Dichtelemente 30 bzw. Dichtringe 31 aus einem Silikon oder Silikongemisch hergestellt.

Die Dichtelemente 30 sind an die konstruktive Struktur der Rohrabschnitte 25, 26 bzw. an die jeweiligen konstruktiven Gegebenheiten an den Verbindungsstellen der Rohrabschnitte 25, 26 zum Saugwerkzeug 15 bzw. zur Zentralleitung 21 angepasst. Jeder Rohrabschnitt 25, 26 weist an den jeweiligen freien Enden einen Rohrflansch 32 und/oder einen Lagerflansch 33 auf. Im Bereich des Rohrflanschen 32 und/oder des Lagerflansches 33 können Dichtstrukturen, beispielsweise in Form von Dichtlippen, Dichtvorsprüngen oder Labyrinthverläufen ausgebildet sein. Besonders vorteilhaft ist eine Ausführungsform, in der jedes Dichtelement 30 bzw. jeder Dichtring 31 im Bereich seiner Dichtfläche eine Labyrinthstruktur aufweist.

Wie bereits erwähnt, ist jede Rohrkonstruktion 22 an die Zentralleitung 21 angeschlossen. Mindestens im Bereich jedes Übergangs von der Rohrkonstruktion 22 zur Zentralleitung 21 ist ein Stellventil 34 angeordnet. Jedes Stellventil 34 ist ansteuerbar und zumindest aus einer Schließstellung in eine Strömungsstellung und zurück bewegbar ausgebildet und eingerichtet. Dazu ist die Steuerungseinrichtung 24 auch mit dem oder jedem Stellventil 34 verbunden. Zusätzlich zu den, den Abfluss der Eingeweide und den Zustrom des Reinigungsmediums steuernden Stellventilen 34 an den Schnittstellen zwischen Zentralleitung 21 und Rohrkonstruktion 22 ist der Zentralleitung 21 ein weiteres Stellventil 35 zugeordnet, das zum Trennen unterschiedlicher Saugbereiche ausgebildet und eingerichtet ist. Das in Transportrichtung T erste Saugwerkzeug 15, mittels dem die größte Menge an Eingeweide gelöst und abgesaugt wird, ist an eine Rohrkonstruktion 22 angeschlossen, die einen Saugquerschnitt aufweist, der größer ist als der bei den weiteren Saugwerkzeugen 15, mittels denen noch Eingeweidereste, Blut, Wasser und dergleichen abgesaugt wird. In der dem ersten Saugwerkzeug 15 zugeordneten Rohrkonstruktion 22 als erstem Saugbereich herrscht im Funktionsbetrieb, also zum Absaugen der Eingeweide, ein Unterdruck P1, der größer ist als der Unterdruck P2 in den übrigen Rohrkonstruktionen 22 des zweiten Saugbereiches. Über das ausschließlich der Zentralleitung 21 zugeordnete Stellventil 35 sind die beiden Saugbereiche unterschiedlicher Unterdrücke voneinander trennbar und im Funktionsbetrieb auch getrennt. Zum Reinigen beider Absaugsysteme ist das Stellventil 35 in eine Strömungsstellung bewegbar, derart, dass durch das Öffnen des Stellventils 35 die beiden Saugbereiche zu einem gemeinsamen Saugbereich bzw. Absaugkreislauf werden, nämlich dem Reinigungskreislauf.

In einer nicht dargestellten Ausführungsform ist der Rohrkonstruktion 22 ein federndes Rückholelement zugeordnet. Beispielsweise ist dazu zwischen der Rohrkonstruktion 22 einerseits und der Zentralleitung 21 und/oder dem Gehäuse 16 der Vorrichtung 10 andererseits ein Kolbenrückholfederelement oder dergleichen angeordnet.

In einer weiteren nicht explizit dargestellten Ausführungsform sind innerhalb des Gehäuses 16 mindestens eine Düse, vorzugsweise jedoch mehrere einem Düsenstock oder mehreren Düsenstöcken zugeordnete Düsen angeordnet, die zum Reinigen des Innenraums 17 der Vorrichtung 10 bzw. des Gehäuses 16 einerseits zum Anschluss an eine Reinigungsleitungssystem, beispielsweise die Zentralleitung 21, ausgebildet und eingerichtet sind, und andererseits zum Erreichen des gesamten Innenraums 17 sowie des oder jedes Saugwerkzeugs 15 positioniert und ausgerichtet sind.

## Patentansprüche

1. Vorrichtung (10) zum Entweiden von in der Bauchhöhle (11) geöffneten Fischen (12), umfassend eine Transporteinrichtung (13) mit einem umlaufend angetriebenen Förderelement (14) zum Transport der Fische (12) in einer Transportebene E in Transportrichtung T entlang einer Transportstrecke, mindestens ein entlang der Förderstrecke angeordnetes Saugwerkzeug (15) zum Absaugen von Eingeweiden aus der Bauchhöhle (11), wobei jedes Saugwerkzeug (15) zum Eintauchen in die und zum Auftauchen aus der Bauchhöhle (11) sowie zum Lösen und Absaugen von Eingeweiden senkrecht zur Transportebene E und in der Transportebene E entlang der Transportrichtung T ausgebildet und eingerichtet ist, sowie ein die Transporteinrichtung (13) und jedes Saugwerkzeug (15) mindestens teilweise gegenüber der Umgebung abschirmendes Gehäuse (16), wobei jedem Saugwerkzeug (15) mindestens eine Leitung (18) zum Ableiten der abgesaugten Eingeweide aus dem Saugwerkzeug (15) und zum Einleiten von Reinigungsflüssigkeit in das Saugwerkzeug (15) zugeordnet ist, die mit einem Ende (19) am Saugwerkzeug (15) angeschlossen ist und an einem dem Saugwerkzeug (15) entgegengesetzten freien Ende (20) zum Anschließen an eine Zentralleitung (21) für die abzusaugenden Eingeweide einerseits und die einzuleitende Reinigungsflüssigkeit andererseits ausgebildet und eingerichtet ist, **dadurch gekennzeichnet, dass** jede ein Saugwerkzeug (15) mit der Zentralleitung (21) verbindende Leitung (18) aus einer Rohrkonstruktion (22) gebildet ist, wobei die Rohrkonstruktion (22) zum mitlaufenden Bewegen mit dem oder jedem Saugwerkzeug (15) ausgebildet und eingerichtet ist.

2. Vorrichtung (10) nach Anspruch 1, **dadurch gekennzeichnet, dass** sie mindestens drei Saugwerkzeuge (15) umfasst, wobei jedes Saugwerkzeug (15) mit einer separaten Rohrkonstruktion (22) mit der Zentralleitung (21) verbindbar ausgebildet und eingerichtet ist.

3. Vorrichtung (10) nach Anspruch 1 oder 2, **dadurch gekennzeichnet, dass** sie ein Messinstrument (23) umfasst, das derart konfiguriert ist, um spezifische Fischdaten zu erfassen, sowie mindestens eine Steuerungseinrichtung (24) zum Steuern jedes Saugwerkzeugs (15) in Abhängigkeit der von dem Messinstrument (23) erfassten spezifischen Fischdaten.

4. Vorrichtung (10) nach einem oder mehreren der Ansprüche 1 bis 3, **dadurch gekennzeichnet, dass** jede Rohrkonstruktion (22) mindestens zwei Rohrabschnitte (25, 26) umfasst und die Rohrkonstruktion (22) mit den beiden Rohrabschnitten (25, 26) zwischen dem Saugwerkzeug (15) und der Zentralleitung (21) mindestens drei Gelenkpunkte (27, 28, 29), um die die Rohrabschnitte (25, 26) in einem Schwenkbereich schwenkbar sind, aufweist.

5. Vorrichtung (10) nach Anspruch 4, **dadurch gekennzeichnet, dass** ein erster Gelenkpunkt (27) im Übergangsbereich von der Rohrkonstruktion (22) zur Zentralleitung (21), ein zweiter Gelenkpunkt (28) im Übergangsbereich von der Rohrkonstruktion (22) zum Saugwerkzeug (15) und ein dritter Gelenkpunkt (29) im Bereich der Verbindung der beiden Rohrabschnitte (25, 26) ausgebildet ist.

6. Vorrichtung (10) nach Anspruch 4 oder 5, **dadurch gekennzeichnet, dass** die Schwenkbereiche aller drei Gelenkpunkte (27, 28, 29) ein Schwenken in einer Schwenkebene S gewährleisten, die vertikal aufgespannt und parallel zur Transportrichtung T der Fische (12) ausgerichtet ist.

7. Vorrichtung (10) nach einem oder mehreren der Ansprüche 4 bis 6, **dadurch gekennzeichnet, dass** sämtliche Rohrabschnitte (25, 26) der Rohrkonstruktion (22) aus einem chemisch beständigen Material bestehen.

8. Vorrichtung (10) nach einem oder mehreren der Ansprüche 4 bis 7, **dadurch gekennzeichnet, dass** alle Rohrabschnitte (25, 26) aus Edelstahl hergestellt sind.

9. Vorrichtung (10) nach einem oder mehreren der Ansprüche 4 bis 8, **dadurch gekennzeichnet, dass** im Bereich aller gelenkigen Verbindungsstellen der Rohrabschnitte (25, 26) der Rohrkonstruktion (22) Dichtelemente (30) angeordnet sind.

10. Vorrichtung (10) nach Anspruch 9, **dadurch gekennzeichnet, dass** jedes Dichtelement (30) einen einfachen Dichtring (31) umfasst.

11. Vorrichtung (10) nach Anspruch 9 oder 10, **dadurch gekennzeichnet, dass** jedes Dichtelement (30) aus einem chemisch beständigen Material hergestellt ist.

12. Vorrichtung (10) nach einem oder mehreren der Ansprüche 9 bis 11, **dadurch gekennzeichnet, dass** jedes Dichtelement (30) aus einem reibarmen Material hergestellt ist.

13. Vorrichtung (10) nach einem oder mehreren der Ansprüche 9 bis 12, **dadurch gekennzeichnet, dass** jedes Dichtelement (30) aus PE-UHMW (Polyethylen Ultra High Molecular Weight), Polytetrafluorethylen oder Perfluoralkoxy oder Fluorethylen-Propylen oder dergleichen hergestellt ist.

14. Vorrichtung (10) nach einem oder mehreren der Ansprüche 9 bis 13, **dadurch gekennzeichnet, dass** jedes Dichtelement (30) im Bereich seiner Dichtfläche eine Labyrinthstruktur aufweist.

15. Vorrichtung (10) nach einem oder mehreren der Ansprüche 1 bis 14, **dadurch gekennzeichnet, dass** mindestens im Bereich jedes Übergangs von der Rohrkonstruktion (22) zur Zentralleitung (21) eine Stellventil (34) angeordnet ist.

16. Vorrichtung (10) nach Anspruch 15, **dadurch gekennzeichnet, dass** die Steuerungseinrichtung (24) auch mit dem oder jedem Stellventil (34, 35) verbunden ist.

17. Vorrichtung (10) nach einem oder mehreren der Ansprüche 1 bis 16, **dadurch gekennzeichnet, dass** der Rohrkonstruktion (22) ein federndes Rückholelement zugeordnet ist.

18. Vorrichtung (10) nach Anspruch 17, **dadurch gekennzeichnet, dass** zwischen der Rohrkonstruktion (22) einerseits und der Zentralleitung (21) und/oder dem Gehäuse (16) der Vorrichtung (10) andererseits ein Kolbenrückholfederelement oder dergleichen angeordnet ist.

19. Vorrichtung (10) nach einem oder mehreren der Ansprüche 1 bis 18, **dadurch gekennzeichnet, dass** innerhalb des Gehäuses (16) mindestens eine Düse, vorzugsweise jedoch mehrere einem Düsenstock oder mehreren Düsenstöcken zugeordnete Düsen angeordnet sind, die zum Reinigen des Innenraums (17) der Vorrichtung (10) einerseits zum Anschluss an eine Reinigungsleitungssystem, beispielsweise die Zentralleitung (21), ausgebildet und eingerichtet sind, und andererseits zum Erreichen des gesamten Innenraums (17) sowie des oder jedes Saugwerkzeugs (15) positioniert und ausgerichtet sind.
